# EUROPEAN PATENT APPLICATION

(11) **EP 3 343 076 A1**
(43) Date of publication of application: **04.07.2018**
(21) Application number: 16380039.4
(22) Date of filing: 28.12.2016
(51) Int. Cl.: F16K 5/06

(54) **BALL VALVE WITH A CRYOGENIC SEAT**

(71) Applicant: Bac Valves, S.A., 17600 Figueres (Girona) (ES)
(72) Inventor: Bach Cantenys, Carles, 17600 Figueres (Girona) (ES); Turon Teixidor, Eduard, 17004 Girona (ES); Paradinas Salson, Tomas, 17007 Girona (ES)
(74) Representative: Cabinet Plasseraud

(57) **Abstract**

The present invention relates to a ball valve with a cryogenic seat, comprising a valve body (1) with inlet and outlet conduits (2), a ball (3) with a through hole (4) which is arranged in an inner cavity of the valve body (1) between the inlet and outlet conduits (2), one closing seat for each conduit comprising a sealing gasket (7) having a first part (7.1) that is inserted in a housing (8) defined in the wall (6) of the inner cavity where the ball (3) is arranged, and a second part (7.2) projecting from the housing (8) and contacting the ball (3), and a pressure element (9) pushing the sealing gasket (7) against the ball (3), wherein the pressure element (9) is arranged in the housing (8) of the wall (6) of the inner cavity where the ball (3) is arranged, contacting the first part (7.1) of the sealing gasket (7).

## Description

### Technical Field

The present invention relates to ball valves used in lines carrying fluids, proposing a valve with a cryogenic seat made with features that allow effectively obtaining perfect closure conditions in any condition of use of the valves of application, even at cryogenic temperatures.

### State of the Art

Ball valves are commonly used in lines carrying fluids, comprising a ball provided with a through hole going through it and tightly arranged in a corresponding spherically concave inner cavity defined between an inlet conduit and an outlet conduit of the valve, such that by means of the rotation of the ball, the passage between the mentioned inlet and outlet conduits of the valve can be interrupted and established.

In order for there to be a completely leak-tight closure between the ball and the wall of the inner cavity in which it is arranged, assuring correct working of the valve, the convex surface of the ball must exactly coincide with the concave surface of the inner cavity, a closing seat formed by a sealing gasket made of an elastic material conventionally being arranged around the internal opening of each of the inlet and outlet conduits of the valve, between the wall of the inner cavity where the ball is arranged and the outer surface of the ball for the purpose of adapting to the possible irregularities in the shape of the ball, and thereby preventing valve leaks.

However, at very low temperatures the elastic materials of the gaskets harden and lose the elasticity required for adapting to the irregularities of the ball in the valves, so at said low temperatures the balls may become deformed and become oval-shaped or irregular due to a non-linear shrinkage of the metal material of said balls.

Therefore, in applications of conventional ball valves with cryogenic temperatures (between -29°C and -196°C), the closing seats between the rotating ball and the corresponding wall of the inner cavity lose leak-tightness, whereby leaks occur, so said valves are not efficient at those temperatures.

Patent document ES2549277B1 belonging to the same applicant as the present invention shows a ball valve with a closing seat having a sealing gasket and a spring. The sealing gasket has a first part that is inserted in a housing of the wall of the inner cavity where the ball is arranged, and a second part projecting from said housing and contacting the ball. The spring is located between the wall of the inner cavity where the ball is arranged and the second part of the sealing gasket, such that the spring pushes the second part of the sealing gasket against the surface of the ball, establishing a leak-tight closure.

This closing seat in normal conditions maintains leak-tightness between the ball and the wall of the inner cavity where the ball is arranged, and in cryogenic temperature conditions in which the sealing gasket loses elasticity and the ball can become deformed due to uneven shrinkage of the mass thereof, the spring pushing on the sealing gasket makes the gasket adapt to the surface of the ball, assuring a leak-tight closure.

However, even though this solution assures contact between the second part of the sealing gasket and the ball, the applicant has found that at cryogenic temperatures, the fluid passing through the through hole of the ball leaks out through the housing where the first part of the sealing gasket is inserted.

A solution that allows preventing leaks occurring through the housing where the sealing gasket is inserted is therefore needed.

### Object of the Invention

The invention relates to a ball valve with a cryogenic seat that allows assuring the leak-tightness of the valve, even in cryogenic temperature conditions.

The ball valve comprises:
- a valve body with inlet and outlet conduits,
- a ball with a through hole which is arranged in an inner cavity of the valve body between the inlet and outlet conduits, the ball being able to rotate between a position in which the through hole is communicated with the inlet and outlet conduits and a position in which the passage between said inlet and outlet conduits is interrupted, and
- one closing seat for each inlet and outlet conduit comprising:
   ∘ a sealing gasket having a first part that is inserted in a housing defined in the wall of the inner cavity where the ball is arranged, and a second part projecting from the housing and contacting the ball, and
   ∘ a pressure element pushing the sealing gasket against the ball, wherein the pressure element is arranged in the housing of the wall of the inner cavity where the ball is arranged, contacting the first part of the sealing gasket.

The arrangement of the pressure element in the housing allows creating a space so that the fluid that may leak out of the inside of the valve is retained in the housing of the sealing gasket, such that the actual expansion force of the fluid is utilized to compress the sealing gasket in the housing and at the same time improve the pressure of the sealing gasket on the ball, thereby preventing leaks from occurring through the housing of the sealing gasket and assuring a leak-tight closure between the ball and the sealing gasket, even in very low temperature conditions in which the sealing gasket loses elasticity. In addition, the actual expansion force of the fluid helps compress the pressure element and improve its function of pressing on the sealing gasket.

Preferably, the first part of the sealing gasket has an annular lip which is retained in the housing by the pressure exerted by the pressure element. This arrangement improves the sealing of the housing of the sealing gasket, even further preventing, if possible, fluid leaks from occurring.

Preferably, the pressure element is a hollow garter spring. Making the pressure element hollow allows the fluid entering the housing to freely expand inside the housing, thereby increasing the contact surface between the fluid and the sealing gasket.

Additionally, the valve comprises a channel communicating the inner cavity of the valve with the housing. A communication for leading the fluid to the part of the housing where the pressure element is arranged is thereby intentionally defined, assuring that the actual pressure of the fluid is utilized to improve both the leak-tight sealing of the housing and the leak-tight sealing between the sealing gasket and the ball.

The invention thereby achieves a ball valve with a closing seat that is effectively leak-tight both when the sealing gasket has the elasticity required for adapting to the surface of the ball and when it loses elasticity due to the effect of low temperatures, because the pushing provided by the pressure element provides the pressure required for said sealing gasket to adapt, under pressure, to the surface of the ball, even if said ball presents a deformation, and at the same time the expansion force cf the fluid seeping into the housing of the sealing gasket is utilized to improve the leak-tight sealing of the closing seat.

### Description of the Drawings

Figure 1 shows a partial section view of the closing seat of a ball valve according to the state of the art.
Figure 2 shows a perspective view of a partial section of the ball valve of the invention.
Figure 3 is a complete longitudinal section view of the valve of the preceding figure.

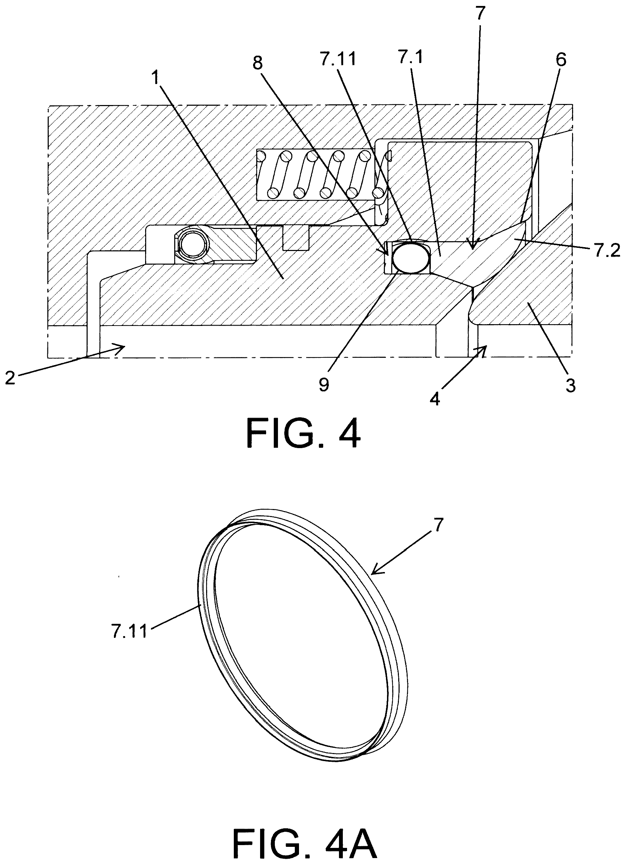

Figure 4 is an enlarged detail of the closing seat of the ball valve of the invention, according to a first embodiment.
Figure 4A shows a perspective view of the sealing gasket of the closing seat of the preceding figure.
Figure 5 is an enlarged detail of the closing seat of the ball valve of the invention, according to a second embodiment.
Figure 5A shows a perspective view of the sealing gasket of the closing seat of the preceding figure.
Figure 6 is an enlarged detail of the closing seat of the ball valve of the invention, according to a third embodiment.
Figure 6A shows a perspective view of the sealing gasket of the closing seat of the preceding figure.

### Detailed Description of the Invention

The invention relates to a ball valve of the type that are arranged in lines carrying fluids, particularly for applications in cryogenic temperature conditions, in the order of temperatures comprised between -29°C and -196°C.

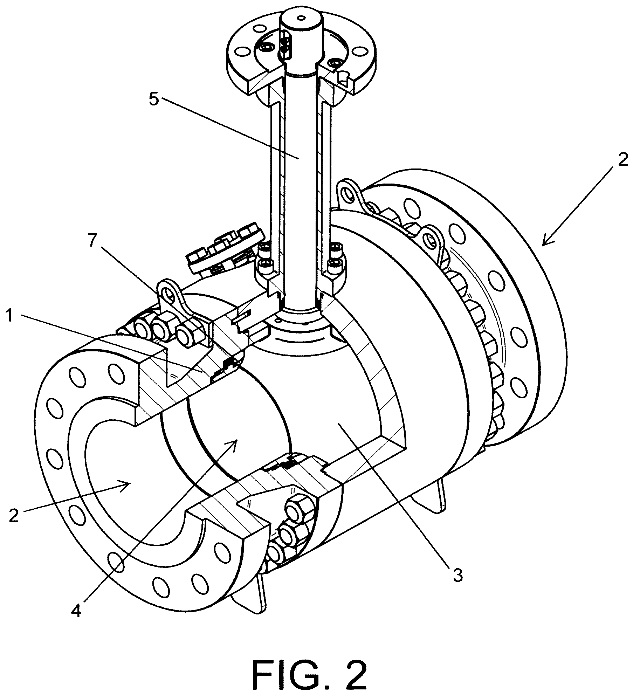

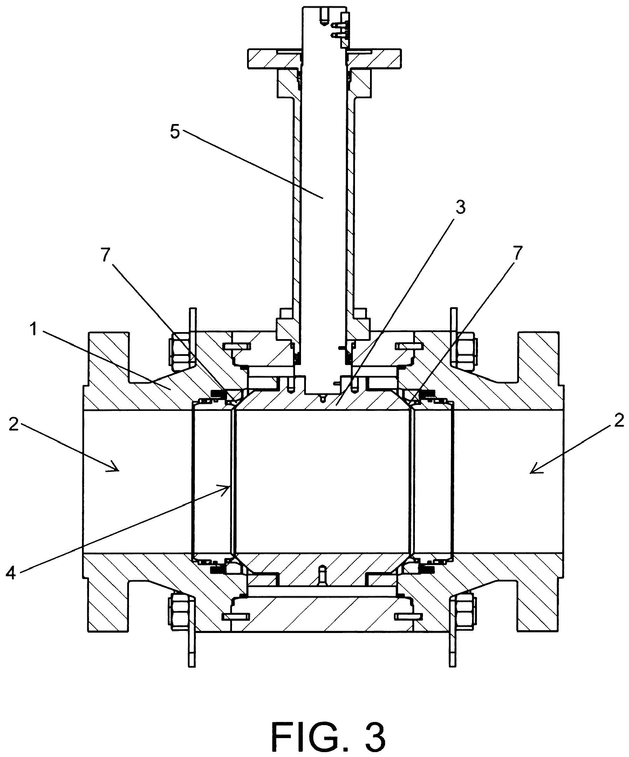

Figures 2 and 3 show a ball valve according to the invention comprising a valve body (1) having a spherically-shaped inner cavity with which respective opposite conduits (2) are communicated, said opposite conduits (2) consisting of one inlet conduit and another outlet conduit for passage through the valve, a ball (3) having a through hole (4) and being attached to a control stem (5) being housed in the inner cavity. By means of the stem (5), the ball (3) can rotate between a position in which the through hole (4) establishes communication between the inlet and outlet conduit (2) of the valve body (1), leaving the passage through the valve open, and another position in which the ball (3) interrupts communication between said inlet and outlet conduit (2) of the valve body (1), leaving the passage through the valve closed.

The valve comprises a cryogenic seat having one closing seat for each inlet and outlet conduit (2) of the valve to obtain a leak-tight closure between the ball (3) and the wall (6) of the inner cavity where the ball (3) is arranged. The closing seat is arranged around the internal opening of each of the inlet and outlet conduits (2) of the valve and comprises a sealing gasket (7) made of an elastic material having a first part (7.1) that is inserted in a housing (8) of the wall (6) of the inner cavity where the ball (3) is arranged and a second part (7.2) projecting from the housing (8) and contacting the ball (3), and a pressure element (9) pushing the sealing gasket (7) against the ball (3).

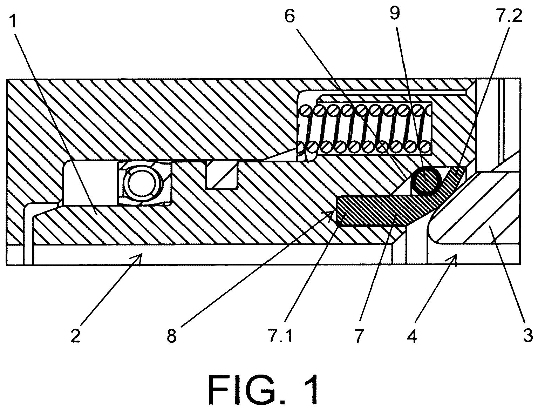

Figure 1 shows a closing seat made according to the prior state of the art. The first part (7.1) of the sealing gasket (7) is inserted in the housing (8) of the wall (6) of the inner cavity where the ball (3) is arranged, whereas the second part (7.2) of the sealing gasket (7) projects from the housing (8), contacting the ball (3). In that arrangement, the pressure element (9) is located between the wall (6) of the inner cavity where the ball (3) is arranged and the second part (7.2) of the sealing gasket (7), such that the pressure element (9) pushes the second part (7.2) of the sealing gasket (7) against the surface of the ball (3). A leak-tight closure is thereby assured because the second part (7.2) of the sealing gasket (7) is pressed on the surface of the ball (3) due to the action of the pressure element (9); however, at low, virtually cryogenic temperatures, fluid tends to leak out from the inner cavity through the housing (8) where the first part (7.1) of the sealing gasket (7) is inserted.

The invention proposes solving this problem by arranging the pressure element (9) in the housing (8) of the wall (6) of the inner cavity where the ball (3) is arranged, the pressure element (9) contacting the first part (7.1) of the sealing gasket (7). With this arrangement, the housing (8) is not completely covered by the first part (7.1) of the sealing gasket (7), but rather part of the housing (8) is occupied by the pressure element (9), such that the fluid leaking out from inside the valve tends to occupy the space of the housing (8) where the pressure element (9) is located, the fluid being retained in said space. As a result of its own pressure, the fluid compresses the sealing gasket (7) in the housing (8), pushing it against the ball (3), which favors the fluid not seeping out of the housing (8) and the sealing gasket (7) pressing against the ball (3). At the same time, the pressure of the fluid helps the pressure element (9) exert force on the sealing gasket (7) and thereby apply more pressure on the ball (3).

According to a preferred embodiment of the invention, the first part (7.1) of the sealing gasket (7) has an annular lip (7.11) which is retained in the housing (8) by the pressure exerted by the pressure element (9). The annular lip (7.11) is arranged in the outer part of the sealing gasket (7) such that it is retained between the pressure element (9) and the upper wall of the housing (8), whereas the fluid leaking out from inside the valve tends to enter the housing (8) through the lower part thereof. The pressure of the fluid therefore helps the pressure element (9) tighten the annular lip (7.11) of the sealing gasket (7), so the sealing is improved, preventing fluid from leaking out of the housing (8), even at cryogenic temperatures in which the sealing gasket (7) loses elasticity.

Preferably, the pressure element (9) is a hollow garter spring, i.e., an annular coil spring, such that since it is a hollow element, it allows fluid to fill the housing (8) and exert suitable pressure helping to press the sealing gasket (7) against the ball (3), and to press the annular lip (7.11) against the upper wall of the housing (9).

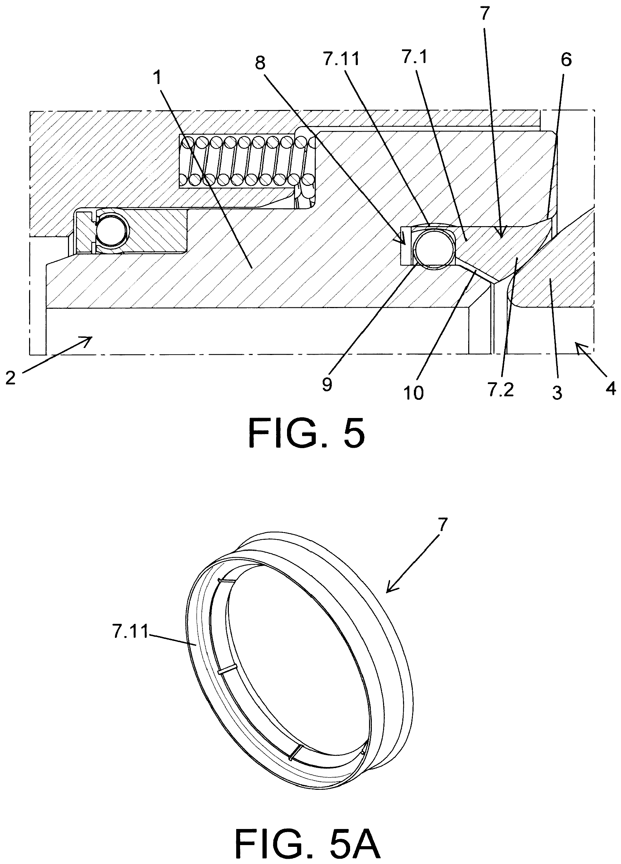

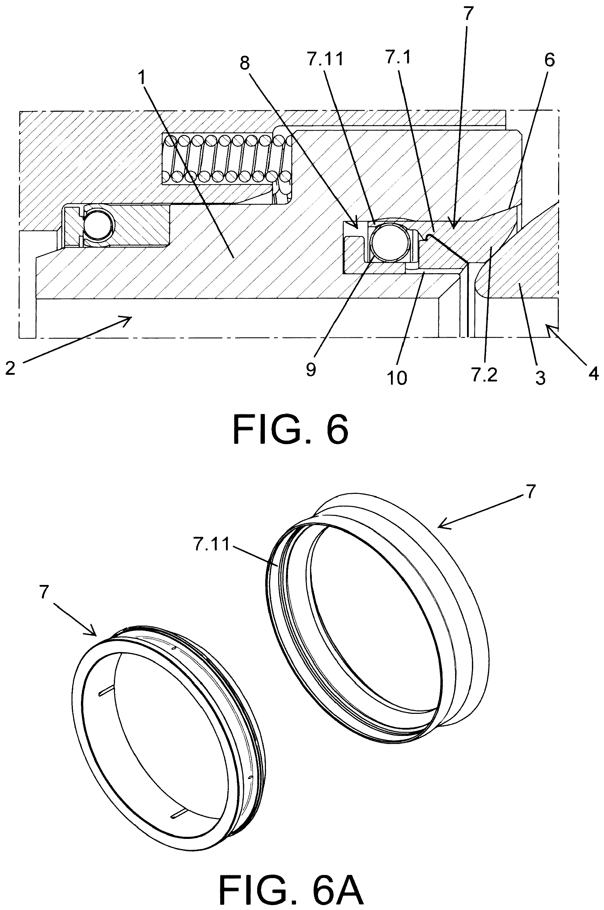

As can be seen in the embodiments of Figures 5 and 6, it has been envisaged that the valve additionally comprises a channel (10) communicating the inner cavity where the ball (3) is arranged with the housing (8). Communication assuring that the fluid enters the housing (8) is thereby assured, guaranteeing that the pressure of the actual fluid will be utilized to improve the sealing properties of the valve, even at cryogenic temperatures.

In small valves used for lines carrying fluids at low pressure, the fastening for assembling the sealing gasket (7) can be established by simply gripping on one of the edges thereof, like in the example of Figures 5 and 5A, thereby making it easier to assemble the valve; however, in large valves used for lines carrying fluids at high pressure, the fastening for assembling the sealing gasket (7) comprise two annular parts, as seen in the example of Figures 6 and 6A, so greater resistance to pressure coming from fluids in effective valve closure leak-tightness conditions is obtained.

## Claims

1. A ball valve with a cryogenic seat, comprising:
- a valve body (1) with inlet and outlet conduits (2),
- a ball (3) with a through hole (4) which is arranged in an inner cavity of the valve body (1) between the inlet and outlet conduits (2), the ball (3) being able to rotate between a position in which the through hole (4) is communicated with the inlet and outlet conduits (2) and a position in which the passage between said inlet and outlet conduits (2) is interrupted, and
- ane closing seat for each inlet and outlet conduit (2) comprising:
∘ a sealing gasket (7) having a first part (7.1) that is inserted in a housing (8) defined in the wall (6) of the inner cavity where the ball (3) is arranged, and a second part (7.2) projecting from the housing (8) and contacting the ball (3), and
∘ a pressure element (9) pushing the sealing gasket (7) against the ball (3), **characterized in that** the pressure element (9) is arranged in the housing (8) of the wall (6) of the inner cavity where the ball (3) is arranged, contacting the first part (7.1) of the sealing gasket (7).

2. The ball valve with a cryogenic seat according to claim 1, **characterized in that** the first part (7.1) of the sealing gasket (7) has an annular lip (7.11) which is retained in the housing (8) by the pressure exerted by the pressure element (9).

3. The ball valve with a cryogenic seat according to any one of the preceding claims, **characterized in that** the pressure element (9) is a hollow garter spring.

4. The ball valve with a cryogenic seat according to any one of the preceding claims, **characterized in that** it additionally comprises a channel (10) communicating the inner cavity of the valve with the housing (8).
